# EUROPEAN PATENT APPLICATION

(11) **EP 4 332 926 A1**
(43) Date of publication of application: **06.03.2024**
(21) Application number: 23192899.5
(22) Date of filing: 23.08.2023
(51) Int. Cl.: G07C 9/28, G07C 9/00

(54) **SYSTEMS AND METHODS FOR ACCESS CONTROL**

(30) Priority: 29.08.2022 US 202263401973 P
(71) Applicant: Apple Inc., Cupertino, CA 95014 (US)
(72) Inventor: LYNCH, Kevin M, Cupertino, 95014 (US)
(74) Representative: Barton, Russell Glen

(57) **Abstract**

Systems and methods described herein provide access control. In one implementation, an access control identification is obtained. The access control identification is associated with at least one user. An access control point controlling access is identified. The access control identification is sent from the mobile device to an access control system associated with the access control point.

## Description

### CROSS-REFERENCE TO RELATED APPLICATIONS

The present application claims priority to U.S. Provisional Application Serial No. 63/401,973, entitled "SYSTEMS AND METHODS FOR ACCESS CONTROL," filed August 29, 2022, which is incorporated by reference herein in its entirety.

### FIELD

Aspects of the present disclosure relate to systems and methods for access control and more particularly to controlling mobile device access through an access control point.

### BACKGROUND

Mobile device access may be controlled in various manners and for a variety of purposes. However, obtaining access typically involves long wait times. Additionally, attempts to decrease wait time often involve multiple different devices with disparate management and functionality, thereby complicating access.

### SUMMARY

Implementations described and claimed herein provide systems and methods for access control. In some implementations, an access control identification is obtained at a mobile device. The access control identification is associated with at least one user. An access control point controlling access to at least a portion of a travel path of the mobile device is identified. The access control identification is sent from the mobile device to an access control system associated with the access control point when the mobile device is within a proximity of the access control point.

In some implementations, a first communication system is configured to obtain an access control identification. The access control identification is associated with at least one user. A second communication system is configured to communicate with an access control system associated with an access control point. The first communication system and the second communication system are each deployed in a mobile device. The access control point controls access to at least a portion of a travel path, and the second communication system sends the access control identification to the access control system when the mobile device is within a proximity of the access control point.

In some implementations, an access control identification is at a mobile device. The access control identification is associated with at least one user. An access control point controlling access to at least a portion of a travel path of the mobile device is identified. The access control identification is sent from the mobile device to an access control system associated with the access control point in response to the mobile device being within a proximity of the access control point.

Other implementations are also described and recited herein. Further, while multiple implementations are disclosed, still other implementations of the presently disclosed technology will become apparent to those skilled in the art from the following detailed description, which shows and describes illustrative implementations of the presently disclosed technology. As will be realized, the presently disclosed technology is capable of modifications in various aspects, all without departing from the spirit and scope of the presently disclosed technology. Accordingly, the drawings and detailed description are to be regarded as illustrative in nature and not limiting.

### BRIEF DESCRIPTION OF THE DRAWINGS

Figure 1 is a block diagram of an example environment for access control.
Figure 2 is a block diagram of an example mobile device.
Figure 3 is a block diagram of example operations for access control.
Figure 4 is a block diagram of other operations for access control.
Figure 5 is a block diagram of an example computing system.

### DETAILED DESCRIPTION

Aspects of the presently disclosed technology relate to system and methods for access control. In one aspect, an access control point controls access to a geographical area. Several mobile devices may plan to access the geographical area at any given time, such that determining whether the mobile device is authorized to access the geographical area and/or processing an account of a user associated with the access by the mobile device often involves delay. Further, many access control systems associated with different access control points have disparate requirements and parameters for providing access. Accordingly, the presently disclosed technology grants access to the geographical area based on an access status of a user. The access status is determined based on an access control identification associated with the user. The access control identification may be obtained at a mobile device from local memory of the mobile device, over a network, and/or from a computing device, such as a user device. The access control identification is received from the mobile device at an access control system associated with the access control point when the mobile device is in a proximity of the access control point. By granting access based on the access control identification received from the mobile device, the mobile device may access the geographical area quickly and without using additional transponders, tags, or other devices particular to the access control system, thereby optimizing access control and increasing user convenience and satisfaction.

For example, the geographical area may include a portion of a travel path along which the mobile device is navigating from an origin towards a destination. The access control point may control access to the portion of the travel path physically, transactionally, and/or the like. For example, a barrier and/or a toll may be used to control access. The mobile device identifies the access control point and obtains an access control identification associated with the user and the access control point. The mobile device sends the access control identification to the access control system when the mobile device is within a proximity of the access control point and accesses the portion of the travel path. In this manner, the mobile device may navigate along the travel path with little to no interruption at the access control point.

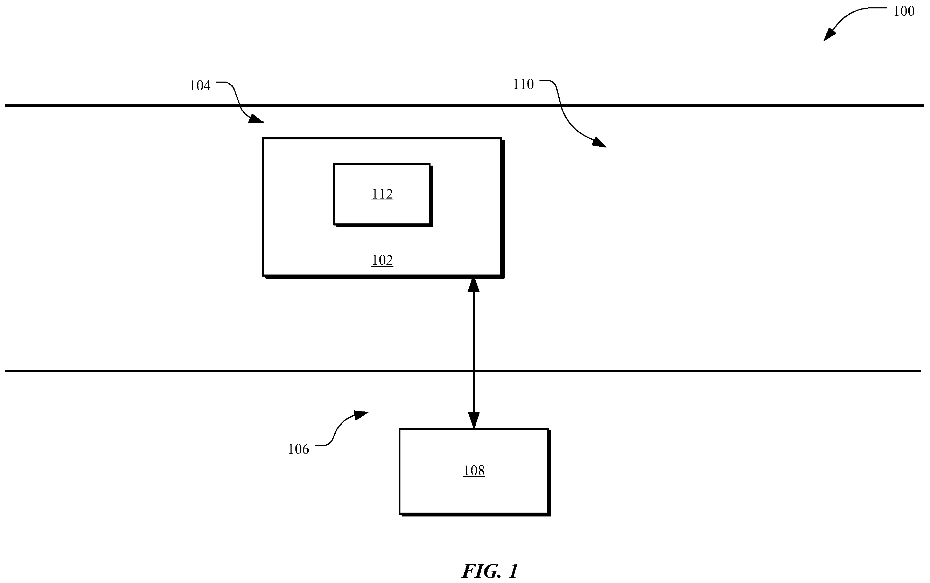

To begin a detailed description of an example environment 100 for access control, reference is made to Figure 1. In one implementation, a mobile device 102 is navigating along a travel path 104 from an origin towards a destination. An access control point 106 may be located relative to the travel path 106 and control access to a geographical area 110, such as the travel path 104, a portion of the travel path 104, indoor spaces, and/or outdoor spaces. The portion of the travel path 104 may include, without limitation, a road along the travel path 104, such as a toll road, an exit from the origin, and/or an entrance to the destination. The exit from the origin and the entrance to the destination may respectively involve exiting and entering a parking structure or similar access-controlled area. The geographical area 110 may be a fixed area or dynamic area that changes. Further, the geographic area 110 may include one or more structures and travel paths. For example, the geographic area 110 may include, without limitation, storage structure(s), garage(s), lot building(s), room(s), road(s), and/or path(s).

The access control point 106 may be a particular geographical location or a particular geographical area corresponding to a distance from or area located relative to the particular geographical location. The access control point 106 is generally associated with a location at which an access status for granting or denying access for the mobile device 102 to the geographical area 110 is determined. The access status may be determined at a physical structure, such as a barrier, a gate, an access station, a toll station, a door, an entrance to an area, and/or an exit from an area. However, it will be appreciated that the access status may be determine at any location associated with granting or denying access to the geographical area 110. For example, the geographical area 110 may be a road, destination, or other area having access limited to authorized mobile devices. Such authorization may be determined using an access control identification associated with one or more users. In one non-limiting example, the access control identification may correspond to a pass that may be single use, ongoing, or limited to a particular time or distance. Prior to or upon access to geographical area 110, the access status may be determined using the access control identification.

The access control point 106 may be operated by or otherwise associated with a regulatory agency, such as an association, a service provider, a state, a city, a municipality, a province, a locality, a region, a county, a nation, and so forth. In some implementations, the access control point 106 is associated with an access control system 108. The access control system 108 may be located proximate to the access control point 106 or at a remote location, such that the mobile device 102 communicates with the access control system 108 over a network.

The access control system 108 may include various hardware and/or software components for controlling access to the geographical area 110. For example, the access control system 108 may include, without limitation, an access communication system and an access controller. The access communication system may include various components for communicating with the mobile device 102, such as one or more transponders, transceivers, and/or receivers. To determine whether to grant access to the geographical area 110, the access controller may determine the access status based on communications received from the mobile device 102. Such communications may include the access control identification. Thus, in one example, the access controller determines the access status by identifying the access control identification, and the access controller provides access by verifying the access control identification. In some examples, providing access may include causing a physical object to move, permitting the mobile device 102 to move along the travel path 104 into the geographical area 110.

The mobile device 102 may obtain the access control identification from local memory of the mobile device 102, a user device 112 over a network from a remote device, and/or other computing devices. The user device 112 may be any computing device associated with the user, such as a smartphone or a wearable. The access control identification 110, upon user approval, may be obtained from a user profile associated with the user. For example, the user profile may include preferences of the user associated with operation of the mobile device 102, access control identifications for different access control points, preferences associated with operation of the user device 112, and/or other user information.

In one implementation, upon user approval, the access control identification for the access control point 106 is obtained by the mobile device 102 based on an identification of the user device 112. Stated differently, the mobile device 102 may determine which access control identification to use in connection with the access control point 106 based on a detected movement of the user device 112, a detected position of the user device 112, a prior use of the user device 112, a connection of the user device 112 with the mobile device 102, a user profile, a prompt, and/or other identification of the user device 112, upon user approval. The mobile device 102 thus determines which access control identification to obtain, if any, for the access control point 106 in various manners consistent with user preferences.

In some examples, the mobile device 102 detects movement of the user device 112 and obtains the access control identification accordingly. For instance, the detected movement of the user device 112 may include the user device 112 traveling along the travel path 104 with the mobile device 102. First location data of the user device 112 may be correlated with second location data of the mobile device 102 for a duration of time and/or for a distance of travel to determine that the user device 112 is traveling with the mobile device 102. The first location data and/or the second location data may include geolocation codes such as those used in global positioning systems. Based on the detected movement, the mobile device 102 identifies the user device 112 and communicates with the user device 112 to obtain the access control identification. For example, based on the identification of the user device 112, the mobile device 102 sends a communication to the user device 112 requesting the access control identification, and the user device 112 sends the access control identification in response. The user device 112 may limit or otherwise control access to the access control identification based on user preferences.

In some examples, the mobile device 102 detects a position of the user device 112 and obtains the access control identification accordingly. The detected position may include, without limitation, the user device 112 being located within an interior of the mobile device 102, at a particular location within the interior, and/or at a particular location relative to the mobile device 102. The particular location within the interior may be a front portion, a rear portion, a left side portion, a right side portion, and/or a specific seat position. The particular position relative to the mobile device 102 may be within the interior of the mobile device 102 or exterior to the mobile device 102. For example, the particular position may be within a threshold distance of the mobile device 102 and/or along a predefined angle relative to the mobile device 102. As another example, the particular position may be relative to particular parts of the mobile device 102, such as a door. Based on the detected position, the mobile device 102 identifies the user device 112 and communicates with the user device 112 to obtain the access control identification based on user preferences as described herein.

In some examples, the mobile device 102 determines a prior use of the user device 112 and obtains the access control identification accordingly. The prior use of the user device 112 may correspond to the user device 112 being used to access and/or form a connection with one or more systems of the mobile device 102, such as a locking system, an environment control system, an entertainment system, and/or a control system. The connection of the user device 112 may include, for example, a paired connection between the user device 112 and the mobile device 102 and/or a trusted relationship in which the user device 112 is a known or previously authenticated device. In some scenarios, the mobile device 102 obtains the access control identification based on which user device unlocked the mobile device 102, which user device summoned the mobile device 102, and/or which user device is associated with an operator of the mobile device 102. Based on the prior use, the mobile device 102 identifies the user device 112 and communicates with the user device 112 to obtain the access control identification based on user preferences as described herein.

In some examples, the mobile device 102 identifies a user profile and obtains the access control identification accordingly. The user profile may include or otherwise specify which access control identification to obtain. The mobile device 102 may identify the user profile in various manners, such as identification of a user, the user device 112 associated with the user, and/or based on a selection of the user profile. The user profile may be stored on the user device 112, the mobile device 102, and/or in a cloud environment. In response to identification of the user profile, the mobile device 102 obtains the access control identification associated with the user profile. For example, the mobile device 102 may receive the access control identification over a network, from the user device 112, from a remote device, from local memory, and so forth. The user profile may further specify user preferences controlling and/or limiting access to the access control identification. In some examples, a single access control identification may be shared across a plurality of user profiles.

A prompt may be presented to determine which access control identification to obtain and/or to grant access to an access control identification. For example, the mobile device 102 may generate a prompt requesting access to an access control identification. The prompt may be presented using a display of the mobile device 102, sent to the user device 112 for display, and/or otherwise presented to a user. In response to the prompt, user input granting or denying access may be captured and sent to the mobile device 102. When the user input grants access to the access control identification, the access control identification is obtained by the mobile device 102, for example by receiving the access control identification from the user device 112. The user input may further specify an access limit to the access control identification. The access limit may include, without limitation, a time duration limit, a distance limit, and/or a use limit. The access limit may specify, for example, that access to the access control identification by the mobile device 102 is limited to the travel path 104, the portion of the travel path 104, a trip, and/or use of the mobile device 102.

Alternatively or additionally, the access control identification may be obtained in response to identification of the access control point 106 in association with movement of the mobile device 102 along the travel path 104. In one implementation, the mobile device 102 navigates along the travel path 104 from the origin to the destination with the access control point 106 located relative to the travel path 104 and the geographic area 110 including at least a portion of the travel path 102. In one example, the mobile device 102 may be capable of operating to move along the travel path 104 with limited input from a person, such as occupants within an interior of the mobile device 102. Stated differently, rather than a person having an operational engagement with the mobile device 102 to control its actions, the person may simply input the destination or other instruction and the mobile device 102 transports the occupant to the destination through a series of decisions made and taken by the mobile device 102. Using localization data, a current geographical position of the mobile device 102 within a geographical area and/or relative to the destination or other location may be determined. Using the localization data, the travel path 104 from the current geographical position to the destination may be generated and a position along the travel path 104 may be determined. Additionally, depending on their nature and movement, one or more objects present in a scene along the travel path 104 inform the actions being executed by the mobile device 102 as it moves through the scene. In one implementation, the mobile device 102 captures sensor data of the scene to generate perception data providing a perception of the scene. Using the localization data and the perception data, the mobile device 102 moves along the travel path 104 through the scene in accordance with its perception, as well as its motion and route planning.

The travel path 104 can include a plurality of portions with access controlled by a plurality of access control points. The plurality of access control points can be different types, and the mobile device 102 can obtain multiple, different access control identifications for gaining access through the different types of access control points. Different types of access control points may be accessed using a single access control identification or multiple, different access control identifications. For example, the access control identification may be unique and specific to the access control point 106. In another example, the access control point 106 may be one of a plurality of access control points operated by a common operator, such that one access control identification may grant access at each of the plurality of access control points. The user profile may include a set of access control identifications. The mobile device 102 and/or the user device 112 identifies the particular access control identification corresponding to the access control point 106 from the set of access control identifications, and the mobile device 102 obtains the particular access control identification. The particular access control identification may be identified based on user input, and/or identification of the access control point 106.

Identification of the access control point 106 may include, for example, identification of a type of the access control point 106, a location of the access control point 106, and/or communication protocols of the access control system 108. For example, the access control point 106 can be identified by the mobile device 102 based on the travel path 104, prior access granted by the access control point 106, communication with the access control system 108, and/or sensor data captured by the mobile device 102. For instance, the mobile device 102 can access navigation data representing the travel path 104, such as a route generated by the mobile device 102 including the travel path 104 and/or a navigation map, and the navigation data can include an indication of the access control point 106 disposed at a location relative to the travel path 104. As another example, the mobile device 102 may store the location of the access control point 106 from a prior access to the geographic area 110 controlled by the access control point 106. The stored location of the access control point 106 can be retrieved upon determining that the travel path 104 corresponds to the previous portion of the travel path 104 previously travelled. As another example, the mobile device 102 may receive the communication from the access control system 108 identifying a location of the access control point 106. The location of the access control point 106 may be identified using the communication based on a transmission range of the access control system 108 and/or the mobile device 102 or otherwise using information included in the communication. As another example, sensor data captured by the mobile device 102 used to detect objects in the scene around the mobile device 102 may be used to identify the access control point 106.

As discussed herein, the access control identification may be obtained from the user device 112, local memory of the mobile device 102, over a network, and/or other computing devices in a variety of manners. In one implementation, the access control identification is obtained via a wired or wireless connection between the user device 112 and the mobile device 102. In one implementation, the mobile device 102 receives the access control identification using a first communication protocol associated with the wired or wireless connection. The wired or wireless connection may include, without limitation, a Bluetooth connection, a Wi-Fi connection, a Universal Serial Bus (USB) connection, a mini-USB connection, a proprietary wired connection, and/or a cellular connection. The first communication protocol may correspond to a first communication system having first hardware and/or software components, including but not limited to a communication port for communicating with the user device 112, a remote server, and/or other computing devices.

In one implementation, the mobile device 102 sends the access control identification to the access control system 108 as a wireless transmission. The wireless transmission between the mobile device 102 and the access control system 108 may use a second communication protocol, such as a Radio Frequency Identification (RFID) communication or a cellular communication. The second communication protocol may be associated with a second communication system including second hardware and/or software components, such as one or more antennas for communicating with the access control system 108. In one example, the second communication system can include an RFID antenna, and the first communication system may include another antenna of a different type than the RFID antenna or other hardware. Moreover, in various usage cases the first communication protocol is different than the second communication protocol.

The mobile device 102 sends the access control identification when the mobile device is in a proximity of the access control point 106 and consistent with user approval to do so. The mobile device 102 may be determined to be in the proximity of the access control point based on: a transmission range of the mobile device 102; a transmission range of the access control system 108; a geographical location of the mobile device 102 relative to a geographical location of the access control point 106; detection of the access control point 106 in sensor data of the mobile device 102; and/or so forth. In some examples, the mobile device 102 sends the access control identification to the access control system 108 in response to the mobile device 102 being in the proximity of the access control point 106. For instance, the access control system 108 can broadcast a ping until the mobile device 102 is within the transmission range of the ping, receives the ping, and responds to the ping by sending the access control identification. In other examples, the mobile device 102 broadcasts the access control identification, such that the access control identification is sent by the mobile device 102 and received by the access control system 108 when the access control point 106 is within a transmission range of the mobile device 102. In other examples, the mobile device 102 may send the access control identification when the mobile device 102 is within a threshold distance of the access control point 106.

In response to receiving the access control identification, the access control system 108 provides access for the mobile device 102 to the geographical area 110 through the access control point 106, such that the mobile device 102 navigates along the portion of the travel path 104. In one example, the access control system 108 grants access to the portion of the travel path 104 based on the access status determined based on the access control identification. Based on the access control identification, the access control system 108 may associate the mobile device 102 approaching the access control point 106 with a user and/or account information. Using the account information, the access control system 108 may determine the access status based on whether the user is authorized. Using the account information, the access control system 108 may also determine the account status based on whether the account information includes a valid payment method or subscription, such as a pass and/or toll account. The access status may thus be determined to be approved or denied and access may be granted or denied accordingly.

If the access status is approved, the access control system 108 grants access to the geographical area 110. The access control system 108 can be a terminal, kiosk, and/or other computing devices and may include one or more transponders, transceivers, and/or receivers for sending and receiving communications to and from the mobile device 102, such as the communication including the access control identification. Moreover, the access control point 106 present and/or cause to be presented one or more indicators to indicate an access status, such as a visual indicator, an audio indicator, and/or a tactile indicator. The indicators may be presented using a presentation system of the mobile device 102, the access control system 108, and/or the user device 112. The indicator may indicate that the pathway for the mobile device 102 is clear to be navigated and/or the mobile device 102 is authorized to access the geographical area 110.

In some examples, the access control system 108 may have a transmission range for sending ping transmissions. In some instances, the mobile device 102 may determine a communication protocol for sending the access control identification based on the pings received from the access control system 108. For example, the mobile device 102 may determine a type of the access control system 108 based on information in the ping, such as an access control device identifier or protocol identifier, and/or other characteristics of the ping. The mobile device 102 may encounter multiple different types of access control systems as the mobile device 102 moves along the travel path 104 and may selectively switch protocols for transmitting the underlying access control identification to the different access control systems.

In this manner, a mobile device 102 identifies the access control point 106 relative to the travel path 104, proactively obtains the access control identification, identifies when the mobile device 102 is approaching the access control point 106, and facilitates access to the geographical area 110, providing a seamless user experience where the mobile device 102 navigates continuously along the travel path 104 without disruption by the access control point 106. The access control identification associates the mobile device 102 with a user and/or account information to permit authorization associated with the access without additional hardware, devices, and/or tags. A user may obtain the access control identification from an authorized provider using the user device 112 or an input system of the mobile device 102, and the access control identification is associated with the mobile device 102. For example, a user may secure authorization by registering with a service provide or regulatory agency for accessing toll roads and/or obtaining an access pass, ticket, or other access authorization using the user device 112 or an input system of the mobile device 102. The user device 112 may include an application that securely organizes various access control identifications that may be used for different access control points. The mobile device 102 may have ongoing permission-based access to the access control identifications and associate them with a user profile of the user and/or obtain the access control identification at various times from the user device 112 as described herein. The access control identification may associate the mobile device 102 with a payment method of the user as the access authorization in some examples. Consistent with user approval, the mobile device 102 identifies the access control point 106 and identifies, obtains, and communicates the appropriate access control identification to the access control system 108 associated with the access control point 106 at the relevant time, such as when the mobile device 102 is in the proximity of the access control point 106. In scenarios where the access control system 108 is a remote device accessible over a network, the user device 112 may perform such operations. Using the access control identification, the access control system 108 determines the account status based on the access authorization (e.g., receipt of payment, authorized user, authorized pass, authorized subscription) and grants access accordingly (e.g., provide physical access, debit an account, process a pass, etc.). Accordingly, the mobile device 102 conveniently facilitates access to various access controlled geographical areas independent of the specific parameters of access control points to those areas.

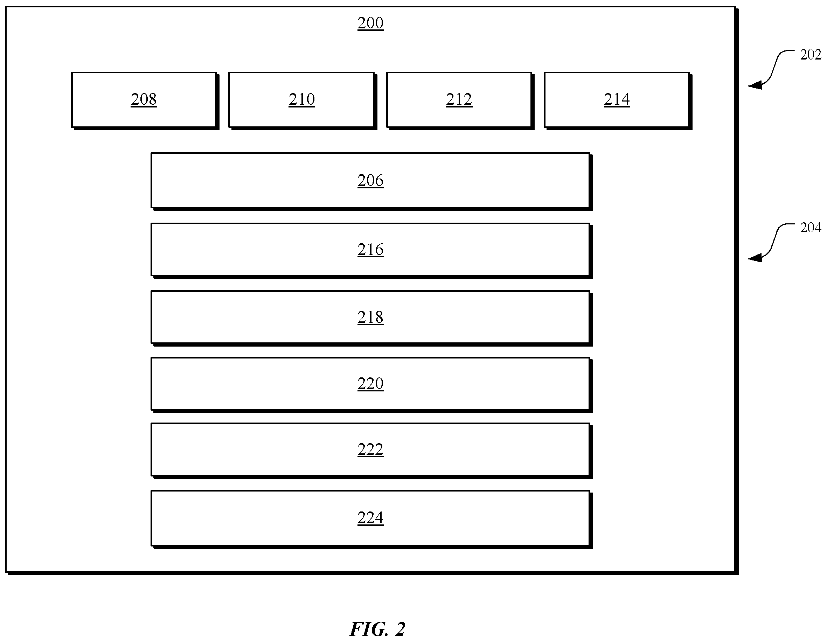

Turning to Figure 2, an example mobile device 200, which may be the mobile device 102 or other mobile devices, is shown. In one implementation, the mobile device 200 includes one or more sensor systems 202 and device systems 204. It will be appreciated that any of a perception system 206, LIDAR sensors 208, cameras 210, localization systems 212, other sensors 214, a planning system 216, a control system 218, subsystems 220, a first communication system 222, and/or a second communication system 224 may be part of or separate from the device systems 206. Further, the first communication system 222 and the second communication system 224 may be separate systems or the same systems. In some cases, the first communication system 222 and the second communication system 224 include different hardware and/or software for communicating using different communication protocols. In other examples, the communication systems 222-224 are the same system or otherwise use the same hardware and/or software.

The sensor system 202 includes one or more sensors configured to capture sensor data of a field of view of the mobile device 200, such as one or more images, localization data corresponding to a location, heading, and/or orientation of the mobile device 200, movement data corresponding to motion of the mobile device 200, and/or access identification data, for example, corresponding to the access control point 106, the access control system 108. The one or more sensors may include, without limitation, 3D sensors configured to capture 3D images, 2D sensors configured to capture 2D images, RADAR sensors, infrared (IR) sensors, optical sensors, and/or visual detection and ranging (ViDAR) sensors. For example, the one or more 3D sensors may include the LIDAR sensors 208 (e.g., scanning LIDAR sensors) or other depth sensors, and the one or more 2D sensors may include the cameras 210 (e.g., RGB cameras). The cameras 210 may capture color images, grayscale images, and/or other 2D images. The localization systems 212 may capture the localization data. The localization systems may include, without limitation, GNSS, inertial navigation system (INS), inertial measurement unit (IMU), global positioning system (GPS), altitude and heading reference system (AHRS), compass, and/or accelerometer. The other sensors 214 may be used to capture sensor data, localization data, movement data, access identification data, and/or other authorized and relevant data.

The perception system 204 can generate perception data, which may detect, identify, classify, and/or determine position(s) of one or more objects (e.g., the access control point 106, the access control system 108, etc.) using the sensor data. The perception data may be used by a planning system 216 in generating one or more actions for the mobile device 200, such as generating a navigation plan having at least one movement action for autonomously navigating the mobile device 200 along the travel path 104 from the origin towards the destination. A control system 218 may be used to control various operations of the mobile device 200 in executing the navigation plan. The navigation plan may include various operational instructions for subsystems 220 of the mobile device 200 to autonomously execute to perform the navigation action(s), as well as other action(s), such that the mobile device 200 moves on its own planning and decisions. Instructions for operating the mobile device 200 in view of the travel path 104 and/or identifying the access control point 106 along at least a portion of the travel path 104 may be executed by the planning system 216, the control system 218, the subsystems 220, and/or other components of the mobile device 200. The instructions may be modified prior to execution by the mobile device 200, and in some cases, the mobile device 200 may disregard the instructions, for example, based on the sensor data captured by the sensor system 202.

In one implementation, consistent with user permissions, the mobile device 200 stores one or more user profiles associated with one or more users of the mobile device 200. As noted above, the user profiles can also be stored at another device, such as the user device 112, a remote server device, and/or in a cloud environment, accessible by the mobile device 200. Furthermore, the mobile device 200 can include one or more communication protocols, such as the first communication protocol for communicating with the user device 112 (e.g., via wired or wireless connections), the second communication protocol for communicating with the access control system 108 (e.g., via RFID or other wireless connections), a third communication protocol for communicating with a remote device (e.g., via a radio access node), and so forth. The mobile device 200 can also store the access control identification based on user permissions, such as upon receiving the access control identification from the user device 112. The access control identification can be an identifier or code, such as an alphanumeric symbol, associating the mobile device 102 with the user and/or account information, which upon being transmitted to the access control system 108, provides access authorization to the access control system 108 and/or requests access through the access control point 106. Stated differently, the access control identification may be associated with one or more accounts of the user such that an account transfer is triggered in connection with gaining access through the access control point 106, for example, from an account associated with the user to an account associated with the access control point 106 as consistent with user permissions.

In some instances, the subsystems 220 of the mobile device 200 can include one more communication subsystems, such as the first communication system 222 and the second communication system 224. However, the communication systems 222-224 may be separate from the subsystems 220. The communication systems 222-224 may include, without limitation, one or more antennae, receivers, transponders, transceivers, and/or communication ports. For instance, the mobile device 200 can include multiple hardware and/or software components for implementing the different communication protocol(s) described herein. A first hardware component can send first transmissions to establish and use the first communication protocol to communicate with the user device 112, and a second hardware component can send second transmissions to establish and use the second communication protocol to communicate with the access control system 108.

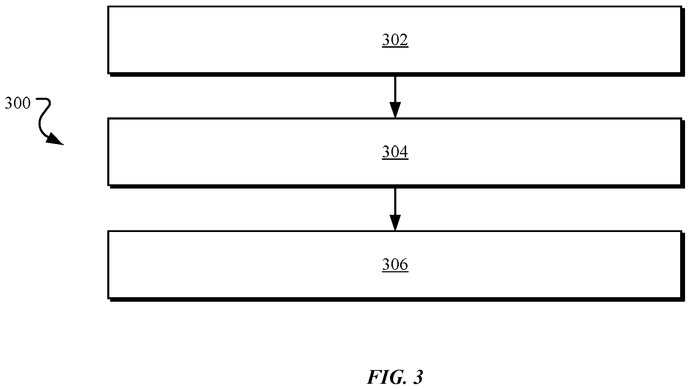

Turning to Figure 3, example operations 300 for access control are illustrated. In one implementation, an operation 302 obtains an access control identification at a mobile device. The access control identification is associated with at least one user. The mobile device may navigate along a travel path from an origin towards a destination. The access control identification may be obtained from a user device associated with the user. The user device may be determined to be associated with the user based on a detected movement of the user device. For example, the detected movement of the user device may include the user device traveling along the travel path with the mobile device. The user device may be determined to be associated with the user based on a detected position of the user device. For example, the detected position of the user device may include the user device being located within an interior of the mobile device and/or at a particular position relative to the mobile device. The user device may be determined to be associated with the user based on a prior use of the user device in accessing one or more systems of the mobile device, for example, to gain access to an interior of the mobile device. The user device may be determined to be associated with the user based on a connection, such as a paired connection, of the user device with the mobile device.

The operation 302 may obtain the access control identification in response to a prompt for granting access to the access control identification. The access to the access control identification by the mobile device may be limited to a time duration, distance duration, the travel path, and/or based on user preferences.

An operation 304 identifies an access control point controlling access to at least a portion of the travel path. For example, the operation 304 may identify the access control point based on: a location of the access control point relative to the travel path; receipt of a communication from the access control system; prior access to the portion of the travel path provided by the access control point; sensor data captured by one or more sensors of the mobile device; and so forth.

An operation 306 sends the access control identification from the mobile device to an access control system associated with the access control point when the mobile device is within a proximity of the access control point. In one example, the mobile device receives the access control identification from a user device using a first communication protocol and sends the access control identification to the access control system using a second communication protocol. The first communication protocol may be different from or the same as the second communication protocol. For example, the first communication protocol may be associated with a wired and/or wireless connection between the user device and the mobile device, and the second communication protocol may include RFID. The mobile device may be determined to be within the proximity of the access control point in various manners, including but not limited to, based on a transmission range of at least one of the mobile device or the access control system; based on a geographical location of the mobile device relative to a geographical location of the access control point; and/or so forth. In one example, sending the access control identification causes an indicator to be presented using a presentation system. For example, following a determination of access status based on the access control identification, access may be granted, triggering the indicator to be presented as described herein.

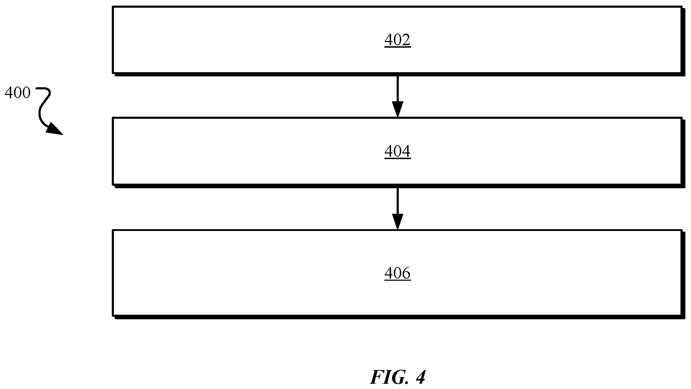

Turning to Figure 4, example operations 400 for access control are illustrated. In one implementation, an operation 402 receives an access control identification associating a mobile device with account information. The mobile device may be requesting access to a geographical area controlled by an access control point. For example, the mobile device may be: approaching the access control point; currently navigating or planning to navigate along a travel path, a portion or all of which is within or otherwise intersects the geographical area; currently exiting or planning to exit the geographical area; currently entering or planning to enter the geographical area; and/or so forth. An operation 404 may determine an access status based on the access control identification. For example, the access status may be approved where the access control identification indicates an authorized user, an authorized mobile device, and/or an authorized account. The access status may be otherwise denied. An operation 406 grants access based on the access status. Where the access status is approved, the operation 406 may provide access physically, transactionally, so forth. Where the access is denied, the operation 406 may deny access physically (e.g., prevent access to the geographical area), transactionally (e.g., issue an invoice, fine, etc.), and so forth.

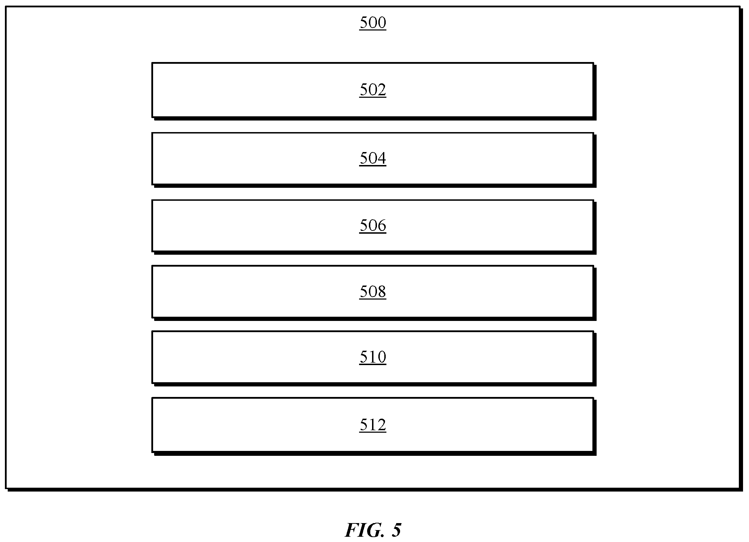

Referring to Figure 5, a detailed description of an example computing device 500 having one or more computing units that may implement various systems and methods discussed herein is provided. Various components of the computing device 500 can be formed into a specific, nonconventional, and non-generic arrangement to achieve the various technological solutions discussed herein. As such, the computing device 500 and/or components of the computing device 500 may be applicable to the mobile device 102, various systems and subsystems of the mobile device 200, the access control point 106, the access control system 108, the user device 112, and other computing or network devices. In some examples, the mobile device 102 is a vehicle, but it will be appreciated that the mobile device 102 may be various types of devices, such as robots, user devices, so forth that may access geographical areas, such as roads or parking, through access control points. It will be appreciated that specific implementations of these devices may be of differing possible specific computing architectures not all of which are specifically discussed herein but will be understood by those of ordinary skill in the art.

The computing device 500 may be a computing system capable of executing a computer program product to execute a computer process. Data and program files may be input to the computing device 500, which reads the files and executes the programs therein. Some of the elements of the computing device 500 are shown in Figure 5, including one or more hardware processor(s) 502, one or more data storage device(s) 504, one or more memory device(s) 506, and/or one or more port(s) 508-512. Additionally, other elements that will be recognized by those skilled in the art may be included in the computing device 500 but are not explicitly depicted in Fig. 5 or discussed further herein. Various elements of the computing device 500 may communicate with one another by way of one or more communication buses, point-to-point communication paths, or other communication means not explicitly depicted in Fig. 5.

The processor 502 may include, for example, a central processing unit (CPU), a microprocessor, a microcontroller, a digital signal processor (DSP), and/or one or more internal levels of cache. There may be one or more processors 502, such that the processor 502 comprises a single central-processing unit, or a plurality of processing units capable of executing instructions and performing operations in parallel with each other, commonly referred to as a parallel processing environment.

The computing device 500 may be a conventional computer, a distributed computer, or any other type of computer, such as one or more external computers made available via a cloud computing architecture. The presently described technology is optionally implemented in software stored on the data stored device(s) 504, stored on the memory device(s) 506, and/or communicated via one or more of the ports 508-512, thereby transforming the computing device 500 in Figure 5 to a special purpose machine for implementing the operations described herein. Examples of the computing device 500 include personal computers, servers, purpose-built autonomy processors, terminals, workstations, mobile phones, tablets, laptops, so forth.

The one or more data storage devices 504 may include any non-volatile data storage device capable of storing data generated or employed within the computing device 500, such as computer executable instructions for performing a computer process, which may include instructions of both application programs and an operating system (OS) that manages the various components of the computing device 500. The data storage devices 504 may include, without limitation, magnetic disk drives, optical disk drives, solid state drives (SSDs), flash drives, so forth. The data storage devices 504 may include removable data storage media, non-removable data storage media, and/or external storage devices made available via a wired or wireless network architecture with such computer program products, including one or more database management products, web server products, application server products, and/or other additional software components. Examples of removable data storage media include Compact Disc Read-Only Memory (CD-ROM), Digital Versatile Disc Read-Only Memory (DVD-ROM), magneto-optical disks, flash drives, and so forth. Examples of non-removable data storage media include internal magnetic hard disks, SSDs, and so forth. The one or more memory devices 506 may include volatile memory (e.g., dynamic random-access memory (DRAM), static random-access memory (SRAM), etc.) and/or non-volatile memory (e.g., read-only memory (ROM), flash memory, etc.).

Computer program products containing mechanisms to effectuate the systems and methods in accordance with the presently described technology may reside in the data storage devices 504 and/or the memory devices 506, which may be referred to as machine-readable media. It will be appreciated that machine-readable media may include any tangible non-transitory medium that is capable of storing or encoding instructions to perform any one or more of the operations of the present disclosure for execution by a machine or that is capable of storing or encoding data structures and/or modules utilized by or associated with such instructions. Machine-readable media may include a single medium or multiple media (e.g., a centralized or distributed database, and/or associated caches and servers) that store the one or more executable instructions or data structures.

In some implementations, the computing device 500 includes one or more port(s), such as an input/output (I/O) port(s) 508, communication port(s) 510, and sub-systems port(s) 512, for communicating with other computing, network, or vehicle devices. It will be appreciated that the ports 508-512 may be combined or separate and that more or fewer ports may be included in the computing device 500.

The I/O port 508 may be connected to an I/O device, or other device, by which information is input to or output from the computing device 500. Such I/O devices may include, without limitation, one or more input devices, output devices, and/or environment transducer devices.

In one implementation, the input devices convert a human-generated signal, such as, human voice, physical movement, physical touch or pressure, so forth, into electrical signals as input data into the computing device 500 via the I/O port 508. Similarly, the output devices may convert electrical signals received from computing device 500 via the I/O port 508 into signals that may be sensed as output by a human, such as sound, light, and/or touch. The input device may be an alphanumeric input device, including alphanumeric and other keys for communicating information and/or command selections to the processor 502 via the I/O port 508. The input device may be another type of user input device including, but not limited to: direction and selection control devices, such as a mouse, a trackball, cursor direction keys, a joystick, and/or a wheel; one or more sensors, such as a camera, a microphone, a positional sensor, an orientation sensor, a gravitational sensor, an inertial sensor, and/or an accelerometer; and/or a touch-sensitive display screen ("touchscreen"). The output devices may include, without limitation, a display, a touchscreen, a speaker, a tactile and/or haptic output device, so forth. In some implementations, the input device and the output device may be the same device, for example, in the case of a touchscreen.

The environment transducer devices convert one form of energy or signal into another for input into or output from the computing device 500 via the I/O port 508. For example, an electrical signal generated within the computing device 500 may be converted to another type of signal, and/or vice-versa. In one implementation, the environment transducer devices sense characteristics or aspects of an environment local to or remote from the computing device 500. Further, the environment transducer devices may generate signals to impose some effect on the environment either local to or remote from the example computing device 500.

In one implementation, a communication port 510 is connected to a network by way of which the computing device 500 may receive network data useful in executing the methods and systems set out herein as well as transmitting information and network configuration changes determined thereby. Stated differently, the communication port 510 connects the computing device 500 to one or more communication interface devices configured to transmit and/or receive information between the computing device 500 and other devices by way of one or more wired or wireless communication networks or connections. Examples of such networks or connections include, without limitation, Universal Serial Bus (USB), Ethernet, Wi-Fi, Bluetooth^{®}, Near Field Communication (NFC), cellular, and so on. One or more such communication interface devices may be utilized via the communication port 510 to communicate one or more other machines, either directly over a point-to-point communication path, over a wide area network (WAN) (e.g., the Internet), over a local area network (LAN), over a cellular (e.g., third generation (3G), fourth generation (4G) network, or fifth generation (5G)), network, or over another communication means. Further, the communication port 510 may communicate with an antenna for electromagnetic signal transmission and/or reception. In some examples, an antenna may be employed to receive Global Positioning System (GPS) data to facilitate determination of a location of a device.

The mobile devices discussed herein may include a vehicle. The computing device 500 may include a sub-systems port 512 for communicating with one or more systems to control an operation of the vehicle and/or exchange information between the computing device 500 and one or more sub-systems of the vehicle. Examples of such sub-systems, include, without limitation, imaging systems, radar, LIDAR, motor controllers and systems, battery control, fuel cell or other energy storage systems or controls in the case of such vehicles with hybrid or electric motor systems, processors and controllers, steering systems, brake systems, light systems, navigation systems, environment controls, entertainment systems, and so forth.

The present disclosure recognizes that the use of navigational areas of interest, sensor data, so forth may be used to the benefit of users in connection with access control services. Entities implementing the present technologies should comply with established privacy policies and/or practices that meet or exceed industry or governmental requirements for maintaining the privacy and security of personal data. Moreover, users should be allowed to "opt in" or "opt out" of allowing a mobile device to participate in such services. Third parties can evaluate these implementers to certify their adherence to established privacy policies and practices.

The system set forth in Figure 5 is but one possible example of a computer system that may employ or be configured in accordance with aspects of the present disclosure. It will be appreciated that other non-transitory tangible computer-readable storage media storing computer-executable instructions for implementing the presently disclosed technology on a computing system may be utilized.

In the present disclosure, the methods disclosed may be implemented as sets of instructions or software readable by a device. Further, it is understood that the specific order or hierarchy of steps in the methods disclosed are instances of example approaches. Based upon design preferences, it is understood that the specific order or hierarchy of steps in the method can be rearranged while remaining within the disclosed subject matter. The accompanying method claims present elements of the various steps in a sample order and are not necessarily meant to be limited to the specific order or hierarchy presented. The described disclosure may be provided as a computer program product, or software, that may include a non-transitory machine-readable medium having stored thereon instructions, which may be used to program a computer system (or other electronic devices) to perform a process according to the present disclosure. A machine-readable medium includes any mechanism for storing information in a form (e.g., software, processing application) readable by a machine (e.g., a computer).

While the present disclosure has been described with reference to various implementations, it will be understood that these implementations are illustrative and that the scope of the present disclosure is not limited to them. Many variations, modifications, additions, and improvements are possible. More generally, embodiments in accordance with the present disclosure have been described in the context of particular implementations. Functionality may be separated or combined in blocks differently in various embodiments of the disclosure or described with different terminology. These and other variations, modifications, additions, and improvements may fall within the scope of the disclosure as defined in the claims that follow.

## Claims

**1.** A method for access control, the method comprising:
obtaining an access control identification at a mobile device, the access control identification associated with at least one user;
navigating the mobile device along a travel path from an origin towards a destination;
identifying an access control point controlling access to at least a portion of the travel path;
and
sending the access control identification from the mobile device to an access control system associated with the access control point when the mobile device is within a proximity of the access control point.

**2.** The method of claim 1, wherein the mobile device receives the access control identification from a user device using a first communication protocol and sends the access control identification to the access control system using a second communication protocol, the first communication protocol being different from the second communication protocol.

**3.** The method of claim 2, wherein the first communication protocol is associated with at least one of a wired or wireless connection between the user device and the mobile device and the second communication protocol includes radio frequency identification (RFID).

**4.** The method of claim 1, wherein the mobile device is determined to be within the proximity of the access control point based on a transmission range of at least one of the mobile device or the access control system.

**5.** The method of claim 1, wherein the mobile device is determined to be within the proximity of the access control point based on a geographical location of the mobile device relative to a geographical location of the access control point.

**6.** The method of claim 1, wherein the access control identification is obtained from a user device associated with the user.

**7.** The method of claim 6, wherein the user device is determined to be associated with the user based on a detected movement of the user device, the detected movement of the user device including the user device traveling along the travel path with the mobile device.

**8.** The method of claim 6, wherein the user device is determined to be associated with the user based on a detected position of the user device, the detected position of the user device including the user device being located within an interior of the mobile device.

**9.** The method of claim 6, wherein the user device is determined to be associated with the user based on a prior use of the user device in accessing one or more systems of the mobile device.

**10.** The method of claim 6, wherein the user device is determined to be associated with the user based on a connection of the user device with the mobile device.

**11.** The method of claim 10, wherein the connection includes a paired connection between the user device and the mobile device.

**12.** One or more tangible non-transitory computer-readable storage media storing computer-executable instructions for performing a computer process on a computing system, the computer process comprising:
obtaining an access control identification at a mobile device navigating along a travel path from an origin towards a destination, the access control identification associated with at least one user;
identifying an access control point controlling access to at least a portion of the travel path;
and
sending the access control identification from the mobile device to an access control system associated with the access control point, the access control identification sent in response to the mobile device being within a proximity of the access control point.

**13.** The one or more tangible non-transitory computer-readable storage media of claim 12, wherein the access control identification is obtained in response to a prompt for granting access to the access control identification.

**14.** The one or more tangible non-transitory computer-readable storage media of claim 13, wherein the access is limited to at least one of a time duration, distance duration, or the travel path.

**15.** The one or more tangible non-transitory computer-readable storage media of claim 12, wherein the access control point is identified based on at least one of: a location of the access control point relative to the travel path; receipt of a communication from the access control system; prior access to the portion of the travel path provided by the access control point; or sensor data captured by one or more sensors of the mobile device.

**16.** The one or more tangible non-transitory computer-readable storage media of claim 12, wherein sending the access control identification causes an indicator to be presented using a presentation system.

**19.** A system for access control, the system comprising:
a first communication system configured to obtain an access control identification, the access control identification associated with at least one user; and
a second communication system configured to communicate with an access control system associated with an access control point, the first communication system and the second communication system each being deployed in a mobile device navigating along a travel path from an origin towards a destination, the access control point controlling access to at least a portion of the travel path, the second communication system sending the access control identification to the access control system when the mobile device is within a proximity of the access control point.

**20.** The system of claim 1, wherein the first communication system obtains the access control identification using a first communication protocol and the second communication system sends the access control identification using a second communication protocol, the first communication protocol being different from the second communication protocol.
